# EUROPEAN PATENT APPLICATION

(11) **EP 4 653 293 A1**
(43) Date of publication of application: **26.11.2025**
(21) Application number: 25174500.6
(22) Date of filing: 06.05.2025
(51) Int. Cl.: B62D 21/15, B62D 25/02

(54) **VEHICLE BODY FRAME STRUCTURE FOR VEHICLE**

(30) Priority: 22.05.2024 JP 2024083021
(71) Applicant: MAZDA MOTOR CORPORATION, Hiroshima 730-8670 (JP)
(72) Inventor: KAMEMOTO, Eiji, Aki-gun Hiroshima, 730-8670 (JP); NATSUME, Hirotaka, Aki-gun Hiroshima, 730-8670 (JP); TSUKAMOTO, Hideyuki, Aki-gun Hiroshima, 730-8670 (JP); NISHIMURA, Yoshikazu, Aki-gun Hiroshima, 730-8670 (JP)
(74) Representative: Müller-Boré & Partner Patentanwälte PartG mbB

(57) **Abstract**

The vehicle body frame structure for a vehicle includes a side sill 10 extending in a vehicle front-rear direction and a reinforcing member 103 accommodated in a hollow section 10a of the side sill 10. The reinforcing member 103 is formed such that plural closed cross-sectional cells 103a, 103b, each of which has an axis in a vehicle width direction, continue in the vehicle front-rear direction. The plural closed cross-sectional cells 103a, 103b each have a hexagonal closed cross section and are formed such that the closed cross-sectional cells 103a, 103b adjacent in the vehicle front-rear direction share a first cell wall. Each of the plural closed cross-sectional cells 103a, 103b is formed such that each side length of the first cell wall is longer than a side length of at least one cell wall of cell walls other than the first cell wall of the cell.

## Description

### [Technical Field]

The present invention relates to a vehicle body frame structure for a vehicle, and a vehicle having the vehicle body frame structure.

### [Background Art]

A vehicle such as an automobile includes a vehicle body to which plural frame members are joined. The frame members that constitute a frame of the vehicle body are each required to secure high rigidity while suppressing a weight increase.

Patent Literature 1 discloses a vehicle body structure that includes a hollow side sill and a reinforcing member that is disposed in the side sill. The reinforcing member that is adopted for the vehicle body structure in Patent Literature 1 will be described with reference to FIG. 8(a).

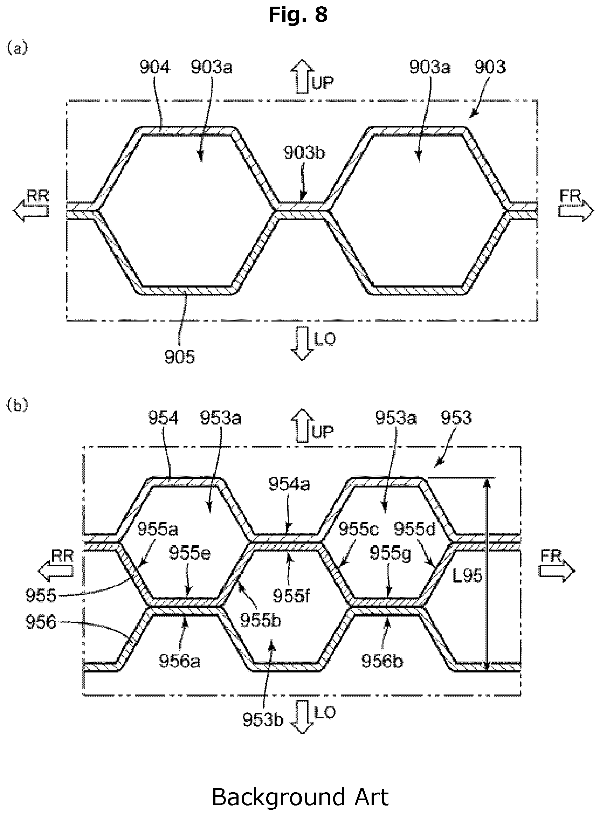

As illustrated in FIG. 8(a), a reinforcing member 903 in Patent Literature 1 is formed by using two plate members (an upper plate member 904 and a lower plate member 905), each of which is bent. The reinforcing member 903 has plural closed cross-sectional cells 903a that are arranged along a longitudinal direction of the side sill (a front-rear direction of the vehicle). Each of the plural closed cross-sectional cell 903a has a hollow columnar shape that extends in a direction orthogonal to a sheet of FIG. 8(a), and has a hexagonal shape (a honeycomb shape) in a side view. In the reinforcing member 903, a joint portion 903b that joins the upper plate member 904 and the lower plate member 905 is provided between each adjacent pair of the adjacent closed cross-sectional cells 903a. In the joined portion 903b, the upper plate member 904 and the lower plate member 905 are superimposed on and joined to each other by welding or the like.

Here, as a measure for improving energy absorption performance at the time when a collision load is input to the side sill from an outer side in a vehicle width direction in Patent Literature 1, it is considered to continuously dispose the adjacent closed cross-sectional cells 903a and expand a disposition area in a height direction. More specifically, as illustrated in FIG. 8(b), a considered reinforcing member 953 can be formed by using three plate members (an upper plate member 954, an intermediate plate member 955, and a lower plate member 956), each of which extends in the longitudinal direction of the side sill and is bent. In this way, the reinforcing member 953 can be configured to have plural closed cross-sectional cells 953a, 953b that are continuously disposed in the front-rear direction of the vehicle with slant wall sections 955a to 955d of the intermediate plate member 955 being interposed therebetween, and to have a height L95 that is greater than that of the reinforcing member 903 illustrated in FIG. 8(a). In the thus-structured reinforcing member 953, the closed cross-sectional cells 953a, 953b, each of which has the honeycomb shape, can continue, and an area in a height direction can expand to be larger than the reinforcing member 903 in Patent Literature 1.

### [Citation List]

### [Patent Literature]

[Patent Literature 1] JP2021-24350A

### [Summary]

### [Technical Problem]

However, it is considered to be difficult to increase an energy absorption amount (an EA amount) of the reinforcing member 953 illustrated in FIG. 8(b) at the time when the collision load is input to the side sill as the frame member from the outer side in the vehicle width direction. In other words, in the reinforcing member 953 in which the plural closed cross-sectional cells 953a, 953b continue in a zigzag shape, each of the closed cross-sectional cells 953a, 953b is small in size, and axial compression becomes unstable. Thus, it is considered to be difficult to increase the energy absorption amount of the reinforcing member 953 at the time when the collision load is input from the outer side in the vehicle width direction.

In addition, it is considered to be difficult to reduce weight and cut manufacturing cost of the reinforcing member 953 illustrated in FIG. 8(b). That is, in the reinforcing member 953, since each of the plate members 954 to 956 are bent such that the plural closed cross-sectional cells 953a, 953b continue in the zigzag shape, an actual length of each of the plate members 954 to 956 is long. This naturally increases the weight of the reinforcing member 953, and thus the weight reduction thereof is difficult. In addition, the reinforcing member 953 has to be joined in a large number of portions (wall portions 954a, 955e to 955g, 956a, 956b) where the plate members 954 to 956 are superimposed on each other, and thus complicated work is required during manufacturing. Therefore, it is difficult to reduce the manufacturing cost of the reinforcing member 953.

The invention has been made to solve the problem as described above, and an object thereof is to provide a vehicle body frame structure for a vehicle capable of realizing a high collision energy absorption property while suppressing increases in weight and manufacturing cost.

### [Solution to Problem]

A vehicle body frame structure according to the invention is defined in claim 1. Particularly, the vehicle body frame structure includes a frame member and a reinforcing member. The frame member is a member that constitutes a frame of a vehicle body, has a hollow section therein, and extends in a first direction. The reinforcing member is a reinforcing member that is accommodated in the hollow section of the frame member, and has plural cells, each of which is formed in a hollow columnar shape having an axis in a second direction intersecting the first direction by plural cell walls, and is formed such that the plural cells are arranged continuously in the first direction.

In the vehicle body frame structure for a vehicle according to the present aspect, the plural cells in the reinforcing member each have an n-sided polygon (n: an even number of 4 or greater) in an orthogonal cross section to the second direction, and are formed such that the adjacent cells in the first direction share the cell wall. In the case where the cell wall that is shared by the adjacent cells is set as a first cell wall, each of the plural cells is formed such that a side length of the first cell wall in the orthogonal cross section is longer than a side length of at least one cell wall of the other cell walls that form the cell.

In the vehicle, to which the vehicle body frame structure according to the present invention is applied, since each of the cells is formed such that the side length of the first cell wall is longer than the side length of the at least one cell wall, it is possible to secure a large cross-sectional area of the closed cross section in each of the cells while continuously arranging the cells each having the n-sided polygonal cross section in the first direction in comparison with a case where plural cells each having a regular n-sided polygonal shape are formed. Therefore, in the vehicle according to the above aspect, compared to a case where a configuration as illustrated in FIG. 8(b) is adopted, it is possible to realize a high collision energy absorption property while suppressing increases in weight and manufacturing cost.

In the vehicle body frame structure according to the above aspect, not a circle is inscribed in the closed cross section of each of the cells, but an oval or an ellipse may be inscribed therein. However, there is a case where the shape of the cell is defined in a mode that the ellipse or the like is not inscribed in all the cell walls forming the cell and the ellipse or the like is not inscribed in at least one of the cell walls. In the vehicle body frame structure according to the above aspect, by adopting such a cell shape, operational effects as described above can be exerted.

In the vehicle body frame structure, such a configuration may be adopted that, in the orthogonal cross section, in the case where a direction that is orthogonal to the first direction is set as a third direction, each of the plural cells has a hexagonal shape in the orthogonal cross section, and has: paired second cell walls that extend in the first direction and oppose in the third direction; and paired third cell walls, each of which connects an end side in the first direction of one cell wall of the paired second cell walls and a respective end side in the third direction of a pair of the first cell walls, and each of the plural cells is formed such that the side length of the first cell wall is longer than a side length of the third cell wall. That is, in the vehicle body frame structure according to the present aspect, the cell has the hexagonal shape in the cross section, and the at least one cell wall is the third cell wall.

In the vehicle, to which the vehicle body frame structure according to the above aspect is applied, the closed cross-sectional shape of each of the cells is the hexagonal shape, and each of the cells is configured that each of the side lengths of the paired first cell walls is longer than the side length of the third cell wall. Thus, compared to a case where the cell structures in the regular hexagonal shapes continue as illustrated in FIG. 8(b), it is possible to make the plural cells continue in the first direction while securing the large cross-sectional area of the hexagonal cell.

In the vehicle body frame structure, such a configuration may be adopted that the frame member is a side sill that is disposed on an outer side in a vehicle width direction of a floor section of the vehicle and is formed to extend in a front-rear direction (or a longitudinal direction) of the vehicle, a cross member, one end of which is connected to the side sill, and which extends in the vehicle width direction, is disposed in the floor section of the vehicle, and in a side view from a side of the vehicle, the reinforcing member is disposed in an area that overlaps the cross member.

In the vehicle, to which the vehicle body frame structure according to the above aspect is applied, since the reinforcing member is disposed in the area that overlaps the cross member in the side view from the side, when a collision load is input from a side of the vehicle to the side sill as the frame member, the load is highly efficiently transmitted to the cross member via the reinforcing member. Thus, in the vehicle, to which the vehicle body frame structure according to the above aspect is applied, even when the side collision load is input to the side sill on one side in the vehicle width direction, the load is transmitted to the side sill on an opposite side via the cross member, and energy can be absorbed highly efficiently.

In the vehicle body frame structure, such a configuration may be adopted that a battery is disposed in the floor section, and the battery is fixed to the side sill.

In the vehicle, to which the vehicle body frame structure according to the above aspect is applied, since the battery is fixed to the side sill having high rigidity, the battery is securely held even when vibration is applied during travel of the vehicle, or the like. In the above vehicle, even when the side collision load is input to the side sill as described above, the energy is absorbed highly efficiently by the reinforcing member, and the load is transmitted to the cross member. Thus, it is possible to suppress the battery from being damaged during the side collision.

In the vehicle body frame structure, such a configuration may be adopted that the reinforcing member is formed by fixing three plate members, each of which extends in the first direction and is bent, to each other.

In the vehicle, to which the vehicle body frame structure according to the above aspect is applied, since the reinforcing member is formed by using the three plate members, it is possible to form the reinforcing member in a simpler manufacturing process than in a case where the reinforcing member is integrally formed by casting or the like. In addition, even when a vehicle type is different, or design is changed, or the like, the reinforcing member can be formed by flexibly changing the shape in comparison with the case where the reinforcing member is formed by casting or the like.

In the vehicle body frame structure, such a configuration is adopted that the three plate members include a first plate member, a second plate member, and a third plate member that are disposed from one side toward the other side in the third direction, in each of the plural cells, the first plate member and the third plate member form the paired second cell walls and the paired third cell walls, and in each of the plural cells, the second plate member forms the paired first cell walls.

In the vehicle, to which the vehicle body frame structure according to the above aspect is applied, each of the first cell walls in the plural cells is formed by the second plate member. Thus, it is possible to realize the configuration of the reinforcing member in an optimum shape by the bent shape of the second plate member while considering the collision energy absorption property.

### [Advantageous Effects of Invention]

In the vehicle having the vehicle body frame structure according to the present invention, it is possible to realize the high collision energy absorption property while suppressing the increases in weight and manufacturing cost.

### [Brief Description of Drawings]

[FIG. 1] FIG. 1 is a plan view illustrating a partial configuration of a vehicle, to which a vehicle body frame structure according to an embodiment of the invention is applied.
[FIG. 2] FIG. 2 is a cross-sectional view illustrating a cross section that is taken along line II-II in FIG. 1.
[FIG. 3] FIG. 3 is a cross-sectional view illustrating a cross section that is taken along line III-III in FIG. 2.
[FIG. 4] FIG. 4 is an exploded perspective view illustrating a configuration of a reinforcing member.
[FIG. 5] FIG. 5 is a cross-sectional view illustrating a partial configuration of the reinforcing member.
[FIG. 6] FIG. 6 is a cross-sectional view illustrating a positional relationship between the reinforcing member and a cross member.
[FIG. 7] FIG. 7(a) is a cross-sectional view illustrating a partial configuration of a reinforcing member in a vehicle body frame structure according to a first modified example, and (b) is a cross-sectional view illustrating a partial configuration of a reinforcing member in a vehicle body frame structure according to a second modified example.
[FIG. 8] FIG. 8(a) is a cross-sectional view illustrating a partial configuration of a reinforcing member that is adopted for a vehicle body frame structure according to the related art, and (b) is a cross-sectional view illustrating a partial configuration of another reinforcing member that is assumed from the related art.

### [Description of Embodiments]

A description will hereinafter be made on an embodiment of the invention with reference to the drawings. The invention will be exemplified in the embodiment described below, and the invention is not limited to the following embodiment in all respects except for an essential configuration thereof.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction. Furthermore, in the following description, a vehicle front-rear direction (or a vehicle longitudinal direction) will simply be described as a "front-rear direction", and a vehicle up-down direction (or a vertical direction) will simply be described as an "up-down direction".

### [Embodiment]

### 1. Configuration of Vehicle 1

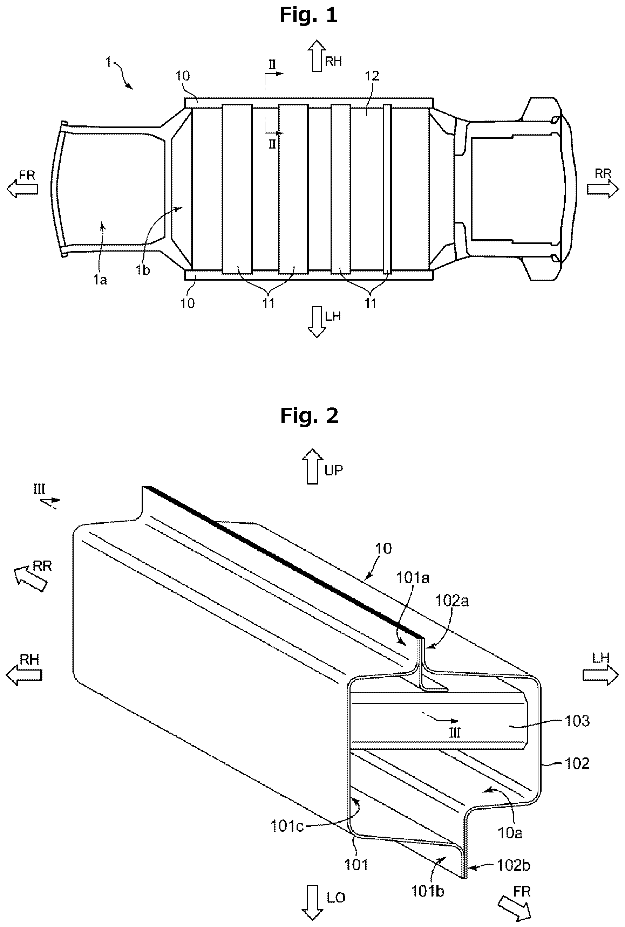

A description will be made on a configuration of a vehicle 1, to which a vehicle body structure according to the present embodiment is applied, with reference to FIG. 1. FIG. 1 illustrates only a part of the configuration of the vehicle 1 and does not illustrate a powertrain and the like.

As illustrated in FIG. 1, the vehicle 1 includes a powertrain mounting section 1a, on which the powertrain is mounted, e.g., in a front portion, and includes a floor section 1b, which is an area where an occupant rides, e.g., behind the powertrain mounting section 1a. Paired side sills (frame members) 10, one or plural cross members 11, and optionally a battery 12 are disposed in the floor section 11b.

The paired side sills 10 are disposed on both sides of the floor section 1b in a vehicle width direction and are each formed to extend in the front-rear direction. Each of the plural cross members 11 extends in the vehicle width direction and is fixed to the side sills 10. The battery 12 sends/receives electric power to/from the powertrain (not illustrated).

For example, the battery 12 includes: a battery cell configured by a lithium-ion battery, a nickel-metal hydride battery, or the like; and a battery casing that accommodates the battery cell.

### 2. Internal Structure of Side Sill 10

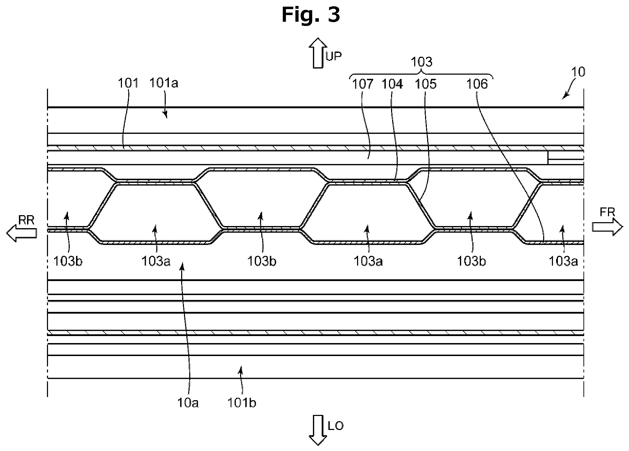

A description will be made on an internal structure of the side sill 10 with reference to FIG. 2 and FIG. 3. In FIG. 2 and FIG. 3, only the right side sill 10 of the paired side sills 10 is illustrated. However, the left side sill 10 has the same internal structure as the right side sill 10 except that the left and right sides are reversed.

As illustrated in FIG. 2, the side sill 10 is configured by fixing an outer side sill 101 and an inner side sill 102, each of which may have a hat cross-sectional shape, to each other. The side sill 10 has a closed cross-sectional structure that has a hollow section 10a therein by fixing the outer side sill 101 and the inner side sill 102.

The outer side sill 101 and the inner side sill 102 have flange sections 101a, 101b and 102a, 102b in the up-down direction, respectively. The outer side sill 101 and the inner side sill 102 are fixed by fixing the upper flange sections 101a and 102a and fixing the lower flange sections 101b and 102b.

A reinforcing member 103 is accommodated in the hollow section 10a of the side sill 10. As illustrated in FIG. 3, the reinforcing member 103 is configured that plural closed cross-sectional cells 103a, 103b continue or arranged in the front-rear direction.

As illustrated in FIG. 3, the plural closed cross-sectional cells 103a, 103b may each have an axis in the vehicle width direction (a direction orthogonal to a sheet of FIG. 3). That is, the plural closed cross-sectional cells 103a, 103b each have a hollow columnar shape that has the axis in the vehicle width direction (a second direction), and are formed to continue in the front-rear direction (a first direction).

For example, each of the plural closed cross-sectional cells 103a, 103b has a hexagonal shape. Then, the closed cross-sectional cell 103a and the closed cross-sectional cell 103b that are adjacent to each other in the front-rear direction are formed to share a cell wall (a first cell wall) that may extend in an oblique direction to the up-down direction and the front-rear direction.

In the present embodiment, each of the closed cross-sectional cells 103a, 103b does not have a regular hexagonal shape but has a distorted hexagonal shape. That is, each of the closed cross-sectional cells 103a, 103b does not have the regular hexagonal shape in which a circle is inscribed, but has the hexagonal shape in which an oval or an ellipse is inscribed in at least a part of the cell wall.

### 3. Detailed Configuration of Reinforcing Member 103

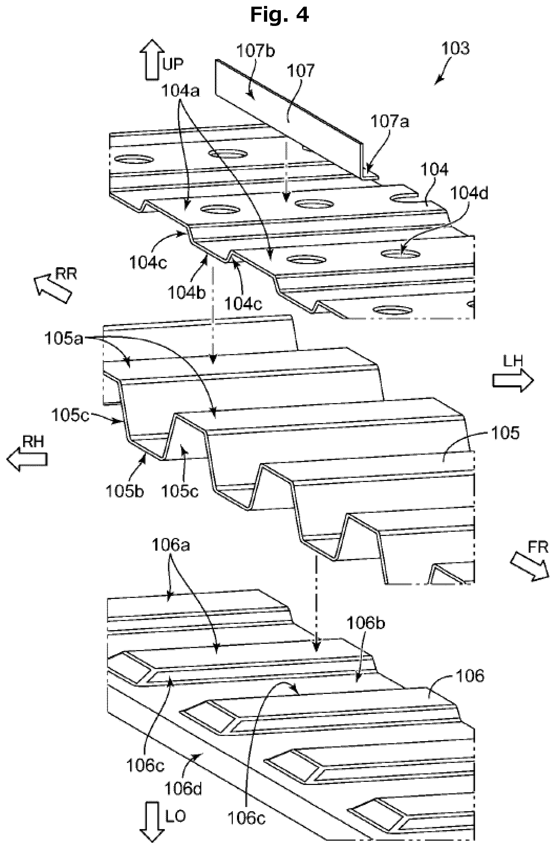

A description will be made on a detailed configuration of the reinforcing member 103 with reference to FIG. 2 to FIG. 4. FIG. 4 is an exploded perspective view illustrating the detailed configuration of the reinforcing member 103.

As illustrated in FIG. 3 and FIG. 4, the reinforcing member 103 is configured by fixing a plurality of plate members, particularly four plate members 104 to 107 including an upper plate member 104, an intermediate plate member 105, and a lower plate member 106, to each other. For example, as illustrated in FIG. 4, the upper plate member 104 is integrally or unitarily formed to have a corrugated shape by one or plural upper wall sections 104a, one or plural lower wall sections 104b, and one or plural slant wall sections 104c.

Each of the plural upper wall sections 104a may be disposed to have a plane that is orthogonal to the up-down direction. At a height position below the upper wall section 104a, each of the plural lower wall sections 104b may be disposed to have a plane that is parallel to the upper wall section 104a. Each of the plural slant wall sections 104c may be disposed to connect an edge in the front-rear direction of the upper wall section 104a and an edge in the front-rear direction of the lower wall section 104b.

In the upper plate member 104, through holes 104d may be formed in the upper wall section 104a. The through hole 104d is a hole through which a welding rod is inserted when the intermediate plate member 105 and the lower plate member 106 are fixedly welded.

The intermediate plate member 105 may be integrally or unitarily formed to have a corrugated shape by one or plural upper wall sections 105a, one or plural lower wall sections 105b, and one or plural slant wall sections 105c. The intermediate plate member 105 may be formed such that a height thereof in the up-down direction is greater than that of the upper plate member 104.

Each of the plural upper wall sections 105a may be disposed to have a plane that is parallel to the upper wall section 104a and/or the lower wall section 104b of the upper plate member 104. At a height position below the upper wall section 105a, each of the plural lower wall sections 105b may be disposed to have a plane that is parallel to the upper wall section 105a. Each of the plural slant wall sections 105c may be disposed to connect an edge in the front-rear direction of the upper wall section 105a and an edge in the front-rear direction of the lower wall section 105b.

Here, the intermediate plate member 105 is formed such that a difference in height position between the upper wall section 105a and the lower wall section 105b in the up-down direction is greater than that of the upper plate member 104. In other words, the difference in height position between the upper wall section 105a and the lower wall section 105b in the up-down direction in the intermediate plate member 105 is greater than a difference in height position between the upper wall section 104a and the lower wall section 104b in the up-down direction in the upper plate member 104. Thus, a height dimension (or a height) of the slant wall section 105c of the intermediate plate member 105 may be greater than a height dimension (or a height) of the slant wall sections 104c of the upper plate member 104.

The lower plate member 106 may be integrally or unitarily formed to have one or plural upper wall sections 106a, one or plural lower wall sections 106b, one or plural slant wall sections 106c, and a flange section 106d. The lower plate member 106 may also be formed to have a corrugated shape by the plural upper wall sections 106a, the plural lower wall sections 106b, and the plural slant wall sections 106c. The lower plate member 106 may be formed such that a height thereof in the up-down direction is substantially the same as that of the upper plate member 104.

For example, each of the plural upper wall sections 106a is disposed to have a plane that is parallel to the upper wall section 105a and/or the lower wall section 105b of the intermediate plate member 105. At a height position below the upper wall section 106a, each of the plural lower wall sections 106b may be disposed to have a plane that is parallel to the upper wall section 106a.

Each of the plural slant wall sections 106c may be disposed to connect an edge in the front-rear direction of the upper wall section 106a and an edge in the front-rear direction of the lower wall section 106b. The flange section 106d may be formed to hang downward from a height position at which the lower wall section 106b is provided, and may have a main surface that faces rightward. The flange section 106d of the lower plate member 106 may be formed to be in surface contact with an inner wall surface 101c of the outer side sill 101 illustrated in FIG. 2, and may be fixed or fixedly welded to the inner wall surface 101c.

For example, the bracket 107 is a plate member in which a horizontal wall section 107a and a vertical wall section 107b are integrally formed, and/or has an angled shape as a whole. The horizontal wall section 107a may be fixed or fixedly welded to the upper wall section 104a of the upper plate member 104.

The vertical wall section 107b may be provided to stand upward from the horizontal wall section 107a, may be sandwiched between the upper flange section 101a of the outer side sill 101 and the upper flange section 102a of the inner side sill 102 illustrated in FIG. 2, and may be fixed or fixedly welded to the upper flange sections 101a, 102a in this state.

### 4. Shape of Closed Cross-Sectional Cells 103a, 103b

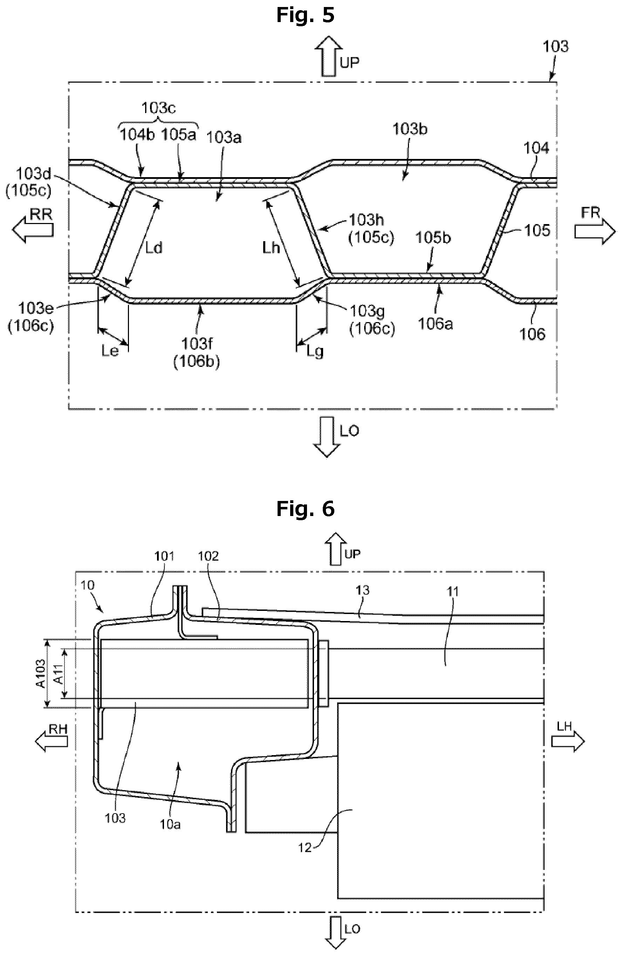

A description will be made on the shapes of the closed cross-sectional cells 103a, 103b in the reinforcing member 103 with reference to FIG. 5. Hereinafter, the shape of the closed cross-sectional cell 103a will be described, and the description on the shape of the closed cross-sectional cell 103b will not be made. However, the closed cross-sectional cell 103b has the same or the substantially same configuration as the closed cross-sectional cell 103a except for having a vertical reversal relationship with respect to the closed cross-sectional cell 103a.

As described above, the reinforcing member 103 may be configured by combining the three plate members 104 to 106, each of which extends in the vehicle front-rear direction and is bent. As illustrated in FIG. 5, the lower wall section 104b of the upper plate member 104 and the upper wall section 105a of the intermediate plate member 105 may be fixed or fixedly welded. In addition, the lower wall section 105b of the intermediate plate member 105 and the upper wall section 106a of the lower plate member 106 may be fixed or fixedly welded. By fixing the three plate members 104 to 106, just as described, the closed cross-sectional cells 103a, 103b of the reinforcing member 103 are formed.

In the closed cross-sectional cell 103a, an internal space having a hexagonal cross section is surrounded by six cell walls 103c to 103h. The upper cell wall 103c may be formed by superimposing the lower wall section 104b of the upper plate member 104 and the upper wall section 105a of the intermediate plate member 105. The upper slant cell walls 103d, 103h may each be formed by the slant wall section 105c of the intermediate plate member 105 and may each be configured to hang obliquely downward from a respective edge of the upper cell wall 103c in the front-rear direction.

The upper slant cell walls 103d, 103h may be cell walls, each of which is shared by the closed cross-sectional cells 103a, 103b that are adjacent to each other in the front-rear direction, and may be a pair of first cell walls. That is, the reinforcing member 103 may be configured that the plural closed cross-sectional cells 103a, 103b continue or are arranged while sharing the upper slant cell walls 103d, 103h.

The lower slant cell walls 103e, 103g may each be formed by the slant wall section 106c of the lower plate member 106 and may be configured to hang obliquely downward from lower edges of the upper slant cell walls 103d, 103h, respectively. The lower cell wall 103f may be formed by the lower wall section 106b of the lower plate member 106.

The lower cell wall 103f may be configured to oppose the upper cell wall 103c in a state parallel to each other and to connect lower edges of the lower slant cell walls 103e, 103g. In the present embodiment, the lower slant cell walls 103e, 103g may be third cell walls.

The upper slant cell walls 103d, 103h have lengths or side lengths (side lengths in a cross section illustrated in FIG. 5) Ld, Lh, respectively. The lower slant cell walls 103e, 103g have lengths or side lengths (side lengths in the cross section illustrated in FIG. 5) Le, Lg, respectively. In this case, the closed cross-sectional cells 103a, 103b are configured such that the side lengths (the lengths) Ld, Lh are respectively longer than the side lengths (the lengths) Le, Lg. In this way, each of the closed cross-sectional cells 103a, 103b does not have the regular hexagonal shape but has the distorted hexagonal shape.

### 5. Positional Relationship Between Reinforcing member 103 and Cross Member 11 in Up-Down Direction

A description will be made on a positional relationship between the reinforcing member 103 and the cross member 11 in the up-down direction with reference to FIG. 6. In FIG. 6, the reinforcing member 103 that is accommodated in the right side sill 10 in the vehicle width direction is illustrated as an example. However, the reinforcing member 103 that is accommodated in the left side sill 10 in the vehicle width direction is also disposed to satisfy the same positional relationship as that illustrated in FIG. 6 in the up-down direction.

As illustrated in FIG. 6, the cross member 11 and the battery 12 may be fixed to an outer wall surface of the inner side sill 102 of the side sill 10. A floor panel 13 may also be fixed to the outer wall surface of the inner side sill 102.

For example, the cross member 11 is disposed below the floor panel 13 and above the battery 12. An area where the cross member 11 is disposed in the up-down direction will be denoted by A11, and an area where the reinforcing member 103 is disposed in the up-down direction will be denoted by A103. In this case, when the cross member 11 and the reinforcing member 103 are viewed from one side in the vehicle width direction, the area A103 may overlap or contain the area A11. That is, in the present embodiment, in the side view from the one side in the vehicle width direction, the reinforcing member 103 may be disposed in the area that overlaps or contains the cross member 11.

### 6. Effects

In the vehicle 1, to which the vehicle body frame structure according to the present embodiment is applied, since each of the closed cross-sectional cells 103a, 103b is formed such that the side lengths Ld, Lh of the paired upper slant cell walls (the first cell walls) 103d, 103h are respectively longer than the side lengths Le, Lg of the lower slant cell walls 103e, 103g, it is possible to secure a large cross-sectional area of the closed cross section of each of the closed cross-sectional cells 103a, 103b while making the closed cross-sectional cells 103a, 103b continue in the front-rear direction (the first direction) in comparison with a case where plural closed cross-sectional cells in the regular hexagonal shapes are formed. Therefore, in the vehicle 1, it is possible to realize a high collision energy absorption property at the time when a collision load (a side collision load) is input to the side sill 10 from the outer side in the vehicle width direction while suppressing increases in weight and manufacturing cost in comparison with a case where the configuration as illustrated in FIG. 8(b) is adopted.

Particularly, in the vehicle 1, to which the vehicle body frame structure according to the present embodiment is applied, the closed cross-sectional shape of each of the closed cross-sectional cells 103a, 103b is the hexagonal shape, but the upper slant cell wall 103d and the lower slant cell wall 103g are not parallel, and the upper slant cell wall 103h and the lower slant cell wall 103e are not parallel. In other words, in the cross section illustrated in FIG. 5 and the like, each of the closed cross-sectional cells 103a, 103b does not have a true inscribed circle but is formed in the shape in which the ellipse is inscribed. Accordingly, in the present embodiment, compared to the case where the regular hexagonal cell structures continue as illustrated in FIG. 8(b), it is possible to make the plural closed cross-sectional cells 103a, 103b continue in the front-rear direction while securing the large cross-sectional area of each of the hexagonal closed cross-sectional cells 103a, 103b.

Further particularly, in the vehicle 1, to which the vehicle body frame structure according to the present embodiment is applied, since the reinforcing member 103 is disposed in the area that overlaps or contains the cross member 11 in the side view from the side, when the collision load is input from the side of the vehicle 1 to the side sill 10 as the frame member, the load is highly efficiently transmitted to the cross member 11 via the reinforcing member 103. Thus, in the vehicle 1, even when the side collision load is input to the side sill 10 on one side in the vehicle width direction, the load is transmitted to the side sill 10 on an opposite side via the cross member 11, and energy can be absorbed highly efficiently.

Further particularly, in the vehicle 1, to which the vehicle body frame structure according to the present embodiment is applied, since the battery 12 is fixed to the side sill 10 having high rigidity, the battery 12 is securely held even when vibration is applied during travel of the vehicle 1, or the like. In the vehicle 1, even when the side collision load is input to the side sill 10 as described above, the energy is absorbed highly efficiently by the reinforcing member 103, and the load is transmitted to the cross member 11. Thus, it is possible to suppress the battery 12 from being damaged during the side collision.

Further particularly, in the vehicle 1, to which the vehicle body frame structure according to the present embodiment is applied, since the reinforcing member 103 is configured to include the three plate members 104 to 106, it is possible to form the reinforcing member 103 in a simpler manufacturing process than in a case where the reinforcing member 103 is integrally formed by casting or the like. In addition, even when a vehicle type is different, or design is changed, or the like, the reinforcing member 103 can be formed by flexibly changing the shape in comparison with the case where the reinforcing member 103 is formed by casting or the like.

Further particularly, in the vehicle 1, to which the vehicle body frame structure according to the present embodiment is applied, each of the upper slant cell walls 103d, 103h in the plural closed cross-sectional cells 103a, 103b is formed by the intermediate plate member (a second plate member) 105. Thus, it is possible to realize the configuration of the reinforcing member 103 in an optimum shape by the bent shape of the intermediate plate member 105 while considering the collision energy absorption property.

As it has been described so far, in the vehicle 1 that has the vehicle body frame structure according to the present embodiment, it is possible to realize the high collision energy absorption property while suppressing the increases in the weight and the manufacturing cost.

### [First Modified Example]

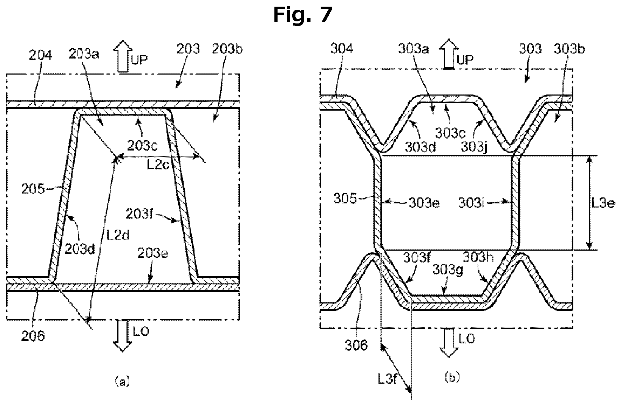

A vehicle body frame structure according to a first modified example will be described with reference to FIG. 7(a). In the vehicle body frame structure according to the present modified example, a configuration of a reinforcing member 203 that is accommodated in the inner hollow section 10a of the side sill 10 differs from that in the above embodiment, and the other configurations are the same as those in the above embodiment. Hereinafter, a description will be made on the configuration of the reinforcing member 203 as a different point from the above embodiment.

As illustrated in FIG. 7(a), in the reinforcing member 203, quadrangular closed cross-sectional cells 203a, 203b may be configured to be arranged continuously in the front-rear direction in a state where the closed cross-sectional cells 203a, 203b that are adjacent to each other in the front-rear direction share a cell wall. For example, the reinforcing member 203 is configured to include three plate members 204 to 205. Of these, the upper plate member 204 and a lower plate member 206 are disposed to oppose each other, and each have a flat plate shape.

Meanwhile, similar to the intermediate plate member 105 in the above embodiment, the intermediate plate member 205 may be bent into a corrugated shape.

In each of the closed cross-sectional cells 203a, 203b, an internal space having a quadrangular (trapezoidal) cross section may be surrounded by four cell walls 203c to 203f.

In the closed cross-sectional cell 203a, the upper cell wall 203c may be formed by superimposing a part of the upper plate member 204 and a bent upper wall section of the intermediate plate member 205. Meanwhile, in the closed cross-sectional cell 203b, the upper cell wall 203c may be formed by a part of the upper plate member 204.

The slant cell walls 203d, 203f may each be formed by a part of the intermediate plate member 205 and may each be configured to hang obliquely downward from a respective edge of the upper cell wall 203c in the front-rear direction. The slant cell walls 203d, 203f may be cell walls, each of which is shared by the closed cross-sectional cells 203a, 203b that are adjacent to each other in the front-rear direction, and may be a pair of the first cell walls.

In the closed cross-sectional cell 203a, the lower cell wall 203e may be formed by a part of the lower plate member 206 and may be configured to be parallel to the upper cell wall 203c. In the closed cross-sectional cell 203b, the lower cell wall 203e may be formed by superimposing a part of the lower plate member 206 and a bent lower wall section of the intermediate plate member 205.

In the closed cross-sectional cells 203a, 203b, the slant cell wall 203d and the slant cell wall 203f may be disposed in a state of being not parallel to each other. That is, each of the closed cross-sectional cells 203a, 203b has, not a square, but a trapezoidal cross-sectional shape.

The slant cell wall 203d has a length or a side length (a side length in a cross section illustrated in FIG. 7(a)) L2d. The upper cell wall 203c has a length or a side length (a side length in a cross section illustrated in FIG. 7(a)) L2c. In this case, the closed cross-sectional cells 203a, 203b are each configured that the side length (or the length) L2d is longer than the side length (or the length) L2c.

The same effects as those in the above embodiment can be exerted for the vehicle, to which the vehicle body frame structure according to the present modified example is applied. That is, the present modified example differs from the above embodiment in that the closed cross-sectional cells 203a, 203b each have the quadrangular shape (n = 4), but the other points are the same as the above embodiment. In addition, the closed cross-sectional cells 203a, 203b are configured that the length L2d of each of the cell walls (the slant cell walls) 203d, 203f shared by the closed cross-sectional cells 203a, 203b that are adjacent to each other in the vehicle front-rear direction is longer than the length L2c of the one cell wall (the upper cell wall) 203c other than the slant cell walls 203d, 203f in the closed cross-sectional cells 203a, 203b. Therefore, the same effects as those in the above embodiment can be exerted for the vehicle, to which the vehicle body frame structure according to the present modified example is applied.

### [Second Modified Example]

A vehicle body frame structure according to a second modified example will be described with reference to FIG. 7(b). In the vehicle body frame structure according to the present modified example, a configuration of a reinforcing member 303 that is accommodated in the inner hollow section 10a of the side sill 10 differs from those in the above embodiment and the above first modified example, and the other configurations are the same as those in the above embodiment and the above first modified example. Hereinafter, a description will be made on the configuration of the reinforcing member 303 as a different point from the above embodiment and the above first modified example.

As illustrated in FIG. 7(b), in the reinforcing member 303, octagonal closed cross-sectional cells 303a, 303b may be configured to continue in the front-rear direction in a state where the closed cross-sectional cells 303a, 303b that are adjacent to each other in the front-rear direction share a cell wall. For example, the reinforcing member 303 is configured to include three plate members 304 to 305. Of these, similar to each of the plate members 104 to 106 in the above embodiment, each of the plate members 304 to 306 is bent to have a corrugated shape in the up-down direction.

In each of the closed cross-sectional cells 303a, 303b, an internal space having an octagonal cross section is surrounded by eight cell walls 303c to 303j.

In the closed cross-sectional cell 303a, the upper cell wall 303c and the upper slant cell walls 303d, 303j may each be formed by a part of the upper plate member 304. Meanwhile, in the closed cross-sectional cell 303b, the upper cell wall 303c and the upper slant cell walls 303d, 303j may each be formed by superimposing a part of the upper plate member 304 and a part of the intermediate plate member 305.

In the closed cross-sectional cells 303a, 303b, vertical cell walls 303e, 303i may each be formed by a part of the intermediate plate member 305 and may be configured to hang obliquely downward from lower edges of the upper slant cell walls 303d, 303j, respectively. The vertical cell walls 303e, 303i may be cell walls, each of which is shared by the closed cross-sectional cells 303a, 303b that are adjacent to each other in the front-rear direction, and are a pair of the first cell walls.

In the closed cross-sectional cell 303a, the lower cell wall 303g and the lower slant cell walls 303f, 303h may each be formed by superimposing a part of the lower plate member 306 and a part of the intermediate plate member 305. Meanwhile, in the closed cross-sectional cell 303b, the lower cell wall 303g and the lower slant cell walls 303f, 303h may each be formed by a part of the lower plate member 306.

In the closed cross-sectional cells 303a, 303b, the vertical cell wall 303e and the vertical cell wall 303i may be disposed in a state of opposing each other in parallel. However, each of the closed cross-sectional cells 303a, 303b does not have a regular octagonal shape but is configured that a length L3e of each of the vertical cell walls 303e, 303i is longer than a length of at least one of the other cell walls 303c, 303d, 303f to 303h, 303j. For example, the vertical cell walls 303e, 303i each have the side length (a side length in a cross section illustrated in FIG. 7(b)) L3e. In addition, the lower slant cell wall 303f has a side length (a side length in the cross section illustrated in FIG. 7(b)) L3f. In this case, the closed cross-sectional cells 303a, 303b are each configured that the side length (or the length) L3e is longer than the side length (or the length) L3f.

The same effects as those in the above embodiment and the above first modified example can be exerted for the vehicle, to which the vehicle body frame structure according to the present modified example is applied. Particularly, the present modified example differs from the above embodiment and the above first modified example in that the closed cross-sectional cells 303a, 303b each have the octagonal shape (n = 8), but the other points are the same as the above embodiment and the above first modified example. In addition, the closed cross-sectional cells 303a, 303b are configured that the length L3e of each of the cell walls (the vertical cell walls) 303e, 303i shared by the closed cross-sectional cells 303a, 303b that are adjacent to each other in the vehicle front-rear direction is longer than the length L3f of the at least one cell wall (the lower slant cell wall) 303f other than the vertical cell walls 303e, 303i in the closed cross-sectional cells 303a, 303b. Therefore, the same effects as those in the above embodiment and the above first modified example can be exerted for the vehicle, to which the vehicle body frame structure according to the present modified example is applied.

### [Other Modified Examples]

In the above embodiment, the reinforcing member 103 that includes the plural closed cross-sectional cells 103a, 103b, each of which has the hexagonal cross-sectional shape, is adopted. In the above first modified example, the reinforcing member 203 that includes the plural closed cross-sectional cells 203a, 203b, each of which has the quadrangular cross-sectional shape, is adopted. In the above second modified example, the reinforcing member 303 that includes the plural closed cross-sectional cells 303a, 303b, each of which has the octagonal cross-sectional shape, is adopted. However, the invention is not limited thereto. The cross-sectional shape of the closed cross-sectional cell may be a decagon, a dodecagon, or greater as long as it is an n-sided polygon (n: an even number of 4 or greater).

In the above embodiment and the above first and second modified examples, the reinforcing members 103, 203, 303 are each accommodated in the hollow section 10a of the side sill 10. However, the invention is not limited thereto. For example, the configuration of the invention may be adopted as a reinforcing member that is accommodated in a hollow section of a pillar (a front pillar, a center pillar, or a rear pillar).

In the above embodiment and the above second modified example, the three bent plate members 104 to 106, 304 to 306 are fixed to each other to constitute the reinforcing members 103, 303, and the plate members 104 to 106, 304 to 306 are superimposed such that bent corner portions of the plate members 104 to 106, 304 to 306 match each other. However, the invention is not limited thereto. However, between the corner portions related to bending of the plate members, mismatching may occur in the front-rear direction or the up-down direction of the vehicle within a range of a manufacturing error.

In the above embodiment and the above first and second modified examples, the reinforcing members 103, 203, 303 are configured by fixing the plural plate members including the three plate members 104 to 106, 204 to 206, 304 to 306 to each other, respectively. However, in the invention, a reinforcing member, at least a part of which is integrally or unitarily formed by casting, can also be adopted.

In the above embodiment and the above first and second modified examples, in the side view from the side (the one side in the vehicle width direction) of the vehicle 1, the reinforcing members 103, 203, 303 are each disposed in the area that overlaps the cross member 11. However, in the invention, the reinforcing member does not always have to be disposed in the area that overlaps the cross member. In the side view from the one side in the vehicle width direction, the reinforcing member may be disposed at a position that does not overlap the cross member and have a shift in the up-down direction.

In the above embodiment and the above first and second modified examples, the configuration that the casing of the battery 12 is directly fixed to the side sill 10 is adopted. However, in the invention, the battery may not be fixed to the side sill. For example, it may be configured that the battery is fixed to the cross member or may be configured that it is fixed to the floor panel.

In the above first modified example, of the three plate members 204 to 206 that form the reinforcing member 203, the plate members 204, 206 are not bent and each have the flat plate shape. However, in the invention, each of the upper plate member 204 and the lower plate member 206 may also be bent to have the corrugated shape in the up-down direction.

### [Reference Signs List]

1: vehicle
1b: floor section
10: side sill (frame member)
11: cross member
101: outer side sill
102: inner side sill
103, 203, 303: reinforcing member
103a, 103b, 203a, 203b, 303a, 303b: closed cross-sectional cell (cell)
103d, 103h: upper slant cell wall (first cell wall)
103e, 103g, 303d, 303f, 303h, 303j: lower slant cell wall
104, 204, 304: upper plate member
105, 205, 305: intermediate plate member
106, 206, 306: lower plate member
203c: upper cell wall
203d, 203f: slant cell wall (first cell wall)
303e, 303i: vertical cell wall (first cell wall)

## Claims

1. A vehicle body frame structure for a vehicle (1) comprising:
a frame member (10) that constitutes as a frame of a vehicle body, has a hollow section (10a) therein, and extends in a first direction; and
a reinforcing member (103; 203; 303) that is accommodated in the hollow section (10a) of the frame member (10), the reinforcing member (103; 203; 303) having plural cells (103a, 103b; 203a, 203b; 303a, 303b), each of which is formed by plural cell walls into a hollow columnar shape that has an axis in a second direction intersecting the first direction, and is formed so that the plural cells (103a, 103b; 203a, 203b; 303a, 303b) are arranged continuously in the first direction, wherein
the plural cells (103a, 103b; 203a, 203b; 303a, 303b) in the reinforcing member (103; 203; 303) each have an n-sided polygon, n being an even number of 4 or greater, in an orthogonal cross section to the second direction, and are formed so that the cells (103a, 103b; 203a, 203b; 303a, 303b) adjacent to each other in the first direction share the cell wall, and
in the case where the cell wall that is shared by the adjacent cells (103a, 103b; 203a, 203b; 303a, 303b) is set as a first cell wall (103d, 103h; 203d, 203f; 303e, 303i), each of the plural cells (103a, 103b; 203a, 203b; 303a, 303b) is formed so that a side length (Ld, Lh; L2d; L3e) of the first cell wall (103d, 103h; 203d, 203f; 303e, 303i) in the orthogonal cross section is longer than a side length (Le, Lg; L2c; L3f) of at least one cell wall of other cell walls that form the cell (103a, 103b; 203a, 203b; 303a, 303b).

2. The vehicle body frame structure according to claim 1, wherein the plural cells (203a, 203b) are quadrangular, hexagonal, octagonal, decagonal, or dodecagonal.

3. The vehicle body frame structure according to claim 1, wherein
in a case where a direction that is orthogonal to the first direction is set as a third direction in the orthogonal cross section,
in the orthogonal cross section, each of the plural cells (103a, 103b; 203a, 203b; 303a, 303b) has a hexagonal shape, and has: paired second cell walls that extend in the first direction and oppose to each other in the third direction; and paired third cell walls (103e, 103g; 303d, 303f, 303h, 303j), each of which connects an end side in the first direction of one cell wall of the paired second cell walls and a respective end side in the third direction of a pair of the first cell walls (103d, 103h; 203d, 203f; 303e, 303i), and
each of the plural cells (103a, 103b; 203a, 203b; 303a, 303b) is formed so that the side length (Ld, Lh; L2d; L3e) of the first cell wall (103d, 103h; 203d, 203f; 303e, 303i) is longer than a side length (Le, Lg; L3f) of the third cell wall (103e, 103g; 303d, 303f, 303h, 303j).

4. The vehicle body frame structure according to any one of the preceding claims, wherein
the frame member (10) is a side sill that is disposed on an outer side in a vehicle width direction of a floor section (1b) of the vehicle and is formed to extend in a front-rear direction of the vehicle (1),
a cross member (11), one end of which is connected to the side sill, and which extends in the vehicle width direction, is disposed in the floor section (1b) of the vehicle, and
in a side view from a side of the vehicle (1), the reinforcing member (103; 203; 303) is disposed in an area that overlaps or contains the cross member (11).

5. The vehicle body frame structure according to claim 4, wherein
a battery (12) is disposed in the floor section (1b), and
the battery (12) is fixed to the side sill.

6. The vehicle body frame structure according to any one of the preceding claims, wherein
the reinforcing member (103; 203; 303) is formed by fixing three plate members (104, 105, 106; 204, 205, 206; 304, 305, 306), each of which extends in the first direction and is bent, to each other.

7. The vehicle body frame structure according to claim 6 referring to claim 3, wherein
the three plate members (104, 105, 106; 204, 205, 206; 304, 305, 306) include a first plate member (104; 204; 304), a second plate member (105; 205; 305), and a third plate member (106; 206; 306) that are disposed from one side toward another side in the third direction,
in each of the plural cells (103a, 103b; 203a, 203b; 303a, 303b), the first plate member (104; 204; 304) and the third plate member (106; 206; 306) form the paired second cell walls and the paired third cell walls (103e, 103g; 303d, 303f, 303h, 303j), and
in each of the plural cells (103a, 103b; 203a, 203b; 303a, 303b), the second plate member (105; 205; 305) forms the paired first cell walls (103d, 103h; 203d, 203f; 303e, 303i).

8. The vehicle body frame structure according to claim 7, wherein
the first plate member (104; 204; 304) has one or more through holes (104d).

9. The vehicle body frame structure according to claim 8, wherein
the first plate member (104) has an upper wall section (104a), a lower wall section (104b), and a slant wall section (104c), and
the upper wall section (104a) has the one or more through holes (104d).

10. The vehicle body frame structure according to claim 9, wherein
the second plate member (105) has an upper wall section (105a), a lower wall section (105b), and a slant wall section (105c), and
the lower wall section (104b) of the first plate member (104) is fixed to the upper wall section (105a) of the second plate member (105).

11. The vehicle body frame structure according to claim 10, wherein
the third plate member (106) has an upper wall section (106a), a lower wall section (106b), and a slant wall section (106c), and
the lower wall section (105b) of the second plate member (105) is fixed to the upper wall section (106a) of the third plate member (106).

12. The vehicle body frame structure according to any one of the preceding claims, wherein
the first direction is a vehicle front-rear direction, and
the second direction is a vehicle width direction.

13. The vehicle body frame structure according to any one of the preceding claims referring to claim 3, wherein
the third direction is a vehicle up-down direction.

14. The vehicle body frame structure according to any one of the preceding claims referring to claim 4, wherein
the side sill (10) has an outer side sill (101) and an inner side sill (102) fixed to each other.

15. A vehicle (1) comprising the vehicle body frame structure according to any one of the preceding claims.
